**Europäisches Patentamt**

**European Patent Office**

**Office européen des brevets**

(19)

(11) Veröffentlichungsnummer: **0 078 970**
**B1**

(12)

# EUROPÄISCHE PATENTSCHRIFT

(45) Veröffentlichungstag der Patentschrift:
**14.05.86**

(21) Anmeldenummer: **82109840.7**

(22) Anmeldetag: **25.10.82**

(51) Int. Cl.⁴: **F 16 J 10/02**, F 16 C 29/00,
F 15 B 15/08

(54) **Kolben-Zylinder-Aggregat.**

(30) Priorität: **10.11.81 CH 7228/81**

(43) Veröffentlichungstag der Anmeldung:
**18.05.83 Patentblatt 83/20**

(45) Bekanntmachung des Hinweises auf die Patenterteilung:
**14.05.86 Patentblatt 86/20**

(84) Benannte Vertragsstaaten:
**AT CH DE FR GB LI SE**

(56) Entgegenhaltungen:
**FR - A - 2 267 495**

(73) Patentinhaber: **Werner Looser Maschinenbau +
Hydraulik, -, CH-8750 Riedern/GL (CH)**

(72) Erfinder: **Lampert, Heinz, Fuchsbühelstrasse 50,
CH-9470 Buchs/SG (CH)**

(74) Vertreter: **Troesch, Hans Alfred, Dr. Ing. et al,
Walchestrasse 19, CH-8035 Zürich (CH)**

**Beschreibung**

Die vorliegende Erfindung betrifft ein Kolben-Zylinder-Aggregat, in dem ein mit einer gewindeartigen inneren Verzahnung versehener, koaxial zum Kolben und zum Zylinder angebrachter Führungsring angeordnet ist.

Es ist ein Kolben-Zylinder-Aggregat gemäss Oberbegriff des Anspruches 1 bekannt geworden, welches die Parallelhalte-Eigenschaften von Kolben- und Zylindermantel gewährleistet. Bei diesem Kolben-Zylinder-Aggregat ist zwischen dem Kolbenteil und dem Zylinderteil ein zylindrischer Führungsring angeordnet, wobei der Führungsring auf seinen inneren und äusseren Mantelflächen mit gegenläufigen, gewindeartigen Verzahnungen versehen ist, welche mit der Kolbenwand einerseits und mit der Zylinderwand andererseits im Eingriff stehen (CH-PS 576 598).

Diese Konstruktion ist bezüglich Wirkungsgrad, Fabrikationsaufwand und Materialbelastung nicht optimal gestaltet. Eine diesbezügliche Weiterentwicklung bietet die vorliegende Erfindung mit einem Kolben-Zylinder-Aggregat an, welches speziell für sehr hohe, auch exzentrische, Belastbarkeit ausgebildet ist und sich dadurch auszeichnet, dass die innere Verzahnung des Führungsrings mit einer äusseren Verzahnung am Kolben in Eingriff steht, wobei der Führungsring mit seinem äusseren Durchmesser an der inneren Mantelfläche des Zylinders anliegt.

Eingehende Berechnungen haben gezeigt, dass auf diese Weise, besonders bei exzentrischer bzw. sog. schiefer Belastung des Kolbens, vorteilhaftere Kräfte- und Momentenverteilungen auftreten, so dass das erfindungsgemässe Kolben-Zylinder-Aggregat sich auch speziell für exzentrisch angreifende Belastungsfälle eignet. Weitere vorteilhafte Ausgestaltungen ergeben sich aus den Unteransprüchen. Ein Ausführungsbeispiel des Erfindungsgegenstandes wird anschliessend anhand einer Zeichnung erläutert. Es zeigen:

Fig. 1 in auseinandergezogener perspektivischer Darstellung in Montagereihenfolge die einzelnen Teile eines Kolben-Zylinder-Aggregates,

Fig. 2 einen Doppel-Achsialschnitt durch ein Kolben-Zylinder-Aggregat, in der linken Hälfte mit ausgefahrenem und in der rechten Hälfte mit eingefahrenem Kolben,

Fig. 3 eine schematische Darstellung eines Kolbens mit Führungsring und Begrenzungsnut mit Bolzen,

Fig. 4 einen Ausschnitt durch einen Führungsring mit Steuerkurve für ein Druckmittelventil.

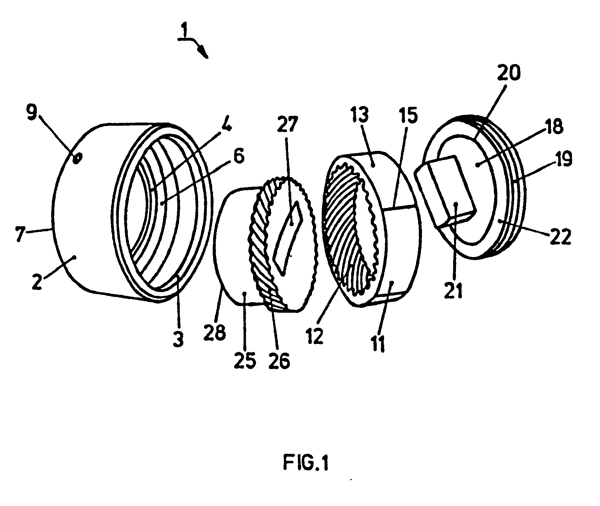

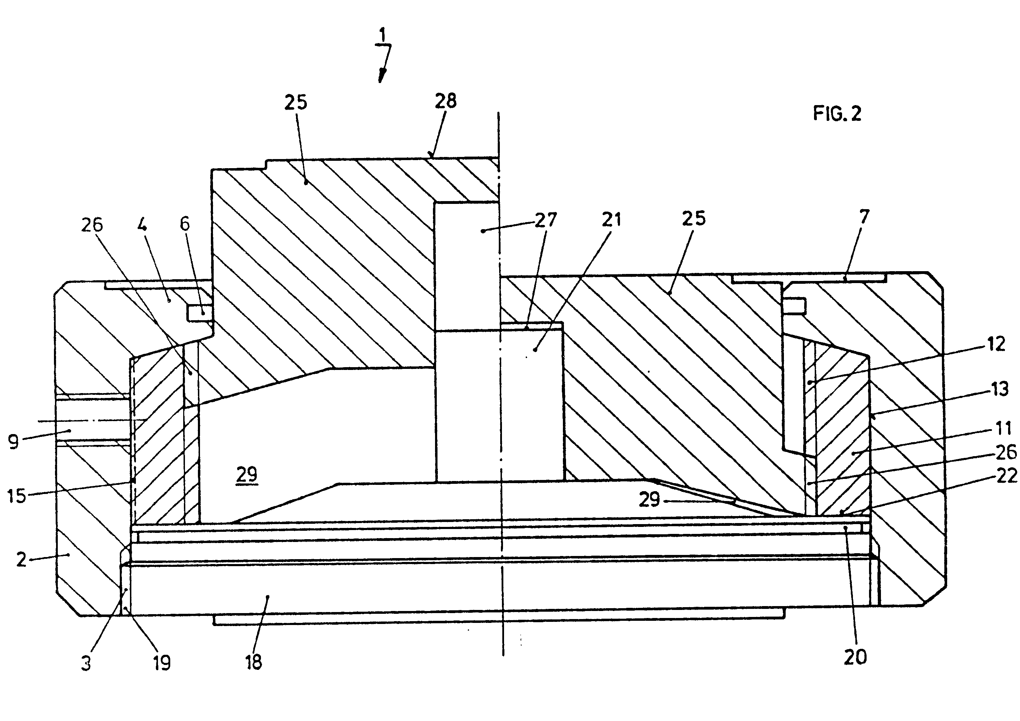

Bei dem in den Fig. 1 und 2 dargestellten Kolben-Zylinder-Aggregat handelt es sich um ein druckmittelbetriebenes sog. Kurzzylinder-Aggregat, bei welchen Aggregaten die Gefahr des Verklemmens des Kolbens im Zylinder besonders gross ist. Dieses Kolben-Zylinder-Aggregat 1 umfasst einen Zylinder 2 mit einem Bodeninnengewinde 3 und einem Hub-Begrenzungskragen 4.

Zur Abdichtung des Kolbens im Zylinder 2 dient eine Ringdichtung in einer Ringnut 6 des Zylinders 2. An der Deckfläche ist ferner eine Ausdrehung 7 für das Anbringen eines Abstreifers vorgesehen. Seitlich befindet sich eine Druckmedium-Anschlussbohrung 9, in welche ein entsprechender Nippel eingeschraubt werden kann.

Der Zylinder 2 ist zur Aufnahme eines zylindrischen Führungsringes 11 vorgesehen, welcher mit einer gewindeförmigen Innenverzahnung 12 versehen ist. Bei der äusseren Mantelfläche des Führungsringes 11 handelt es sich um eine glatte Ring-Aussenfläche 13, welche mit durchgehenden Nuten 15, wie eine solche in Fig. 2 angedeutet ist, versehen ist, um das Druckmedium unter den Kolben zu leiten. Es ist aber auch möglich, die Aussenfläche ganz oder teilweise mit einer der Zahnung 12 gegenläufigen Zahnung zu versehen und den Zylinder 2 mit einer entsprechenden Innenverzahnung. Dann ist aber der Ring 11 bedeutend weniger hoch.

Ein Boden 18 mit Aussengewinde 19 kann in das Boden-Innengewinde 3 des Zylinders 2 eingeschraubt werden. Der Boden 18 weist, zwecks Aufnahme eines O-Ringes, eine Umfangsrille 20 auf. In der Mitte kann sich zur Drehsicherung des Kolbens eine Drehsicherungsplatte 21 befinden, während aussen der Boden 18 mit einem Auflagerand 22 für den Führungsring 11 versehen ist.

Ein Kolben 25 trägt auf seinem einen Aussenteil eine gewindeförmige Aussenverzahnung 26, welche nach Montage mit der gewindeförmigen Innenverzahnung 12 des Führungsringes 11 in Eingriff steht. Um den Kolben 25 heb- und senkbar im Zylinder 2 drehfest zu halten, ist eine plattenförmige Ausnehmung 27 vorgesehen, welche bei der Montage der Aufnahme der Drehsicherungsplatte 21 des Bodens 18 dient. Das Aggregat ist aber auch ohne Drehsicherungsplatte funktionstüchtig. Die Hebefläche 28 des Kolbens 25 ist aussen abgesetzt. Zwischen dem Kolben 25 und dem Boden 18 befindet sich ein Druckraum 29, in welchem das Druckmedium die Anschlussbohrung 9 und die durchgehenden Nuten 15 unter den Kolben 25 gelangt und diesen bei Zuführung des Druckmediums hebt bzw. beim Abströmenlassen senkt.

Durch diese Konstruktion wird eine kippsichere Führung und Auflage des Kolbens 25 über seine Aussenverzahnung 26 und die Innenverzahnung 12 des Führungsringes 11 erreicht, wobei beim Heben und Senken des Kolbens 25 der Führungsring 11 sich im Zylinder 2 dreht. Auf diese Weise wird die Beanspruchung sowohl des Kolbens 25 als auch des Führungsringes 11 und deren Verzahnung 26, 12 sowie der Hub-Begrenzungskragen des Zylinders 2, selbst bei hohen exzentrischen Belastungen des Kolbens 25, funktionstüchtig bleiben und weder Verkanten noch bezüglich bleibender Deformationen oder Brüche an kritischen Stellen leiden.

Die Steigung der gewindeartigen Verzahnung kann 10 bis 60° betragen, wobei etwa 20 oder 30° einen gebräuchlichen Wert darstellt. Der Winkel kann aber grundsätzlich jeden Wert in diesem Bereich annehmen, je nach Verwendungszweck des Aggregates, also auch 10, 40, 45, 50 oder 60°.

Es ist auch möglich, die Nuten 15 in der Wand des Zylinders 2 vorzusehen oder sowohl den Führungsring 11 als auch den Zylinder 2 mit derartigen Nuten 15 auszurüsten.

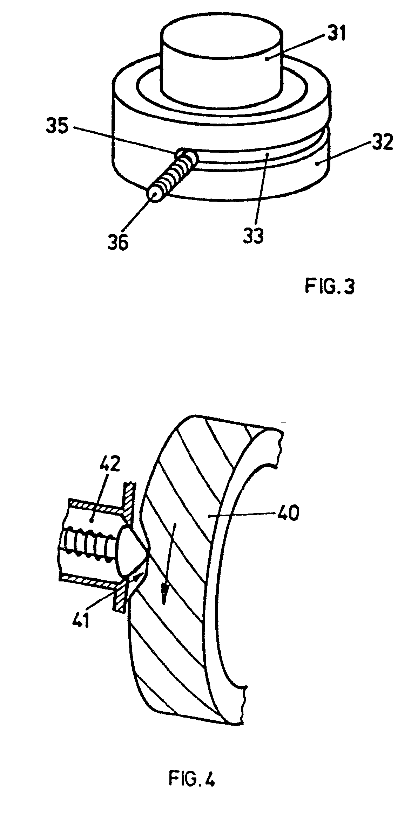

Um die Belastung des Abschlussflansches des Zylinders 2 bei ausgefahrenem Kolben niedrig zu halten bzw. die Bauhöhe des Aggregates kleiner zu gestalten, kann eine vorzeitige Arretierung des Führungsringes vorgesehen werden. Eine derartige Konstruktion ist schematisch in Fig. 3 dargestellt, welche einen inneren Kolben 31, umgeben von einem Führungsring 32, zeigt. Dieser ist mit einer Führungsnut 33 versehen, deren Endanschlag 35 die Drehbewegung des Führungsringes 32 mit Hilfe einer Stiftschraube 36 begrenzt. Diese Stiftschraube 36 durchsetzt den Zylinder 2 seitlich und ragt in die Nut 33. Der Führungsring 32, welcher bezüglich des Hub-Begrenzungskragens 4 des Zylinders 2 Spiel aufweist, dreht sich, da der Kolben 31 drehfest ist, bei dessen axialer Bewegung im Zylinder 2. Bevor nun der Kolben 31 in seine obere Endlage gemäss dem linken Teil der Fig. 2 gelangt, wird der Führungsring 32 in eine Lage gedreht, in welcher die Stiftschraube 36 am Anschlag 35 aufläuft und eine weitere Drehbewegung des Führungsringes 32 und mithin ein weiteres Anheben des Kolbens 31 verhindert. Damit wird sichergestellt, dass der Kolben 31 in seiner ausgefahrenen Lage unter Belastung nicht am Hub-Begrenzungskragen 4 anliegt und diesen belastet.

Der gleiche Zweck kann – mit drehfestem Kolben – erreicht werden durch eine Konstruktion, wie sie Fig. 4 zeigt. Hier weist der Führungsring 40 eine Steuerausnehmung 41 auf, welche der Steuerung eines federbelasteten Medium-Steuerventils 42 dient. Diese sehr schematisch dargestellte Ausführung zeigt, dass normalerweise der Ventilkörper des Steuerventils 42 auf der zylindrischen Aussenfläche des Führungsringes 40 läuft und sich damit in seiner Öffnungslage befindet. Es gelangt mithin Druckmedium unter den Arbeitskolben 25. Bevor nun dieser Kolben in die obere Endlage gelangt, fällt der Ventilkörper des Steuerventils 42 in die Steuerausnehmung 41, so dass dessen Druckfeder nun den Ventilkörper auf seinen Ventilsitz drücken kann und das Ventil schliesst. Eine weitere Druckmittelzufuhr ist damit nicht mehr möglich und der Arbeitskolben 25 wird verhindert, mit vollem Arbeitsdruck gegen den Hub-Begrenzungskragen 4 des Zylinders 2 zu drücken.

Während in Fig. 4 eine axiale Steuerbewegung des Ventils 42 vorgesehen ist, kann diese Steuerung auch radial erfolgen, wobei sich die Steuerausnehmung 21 nur auf der eigentlichen Mantelaussenfläche des Ringes befände.

## Patentansprüche

1. Kolben-Zylinder-Aggregat, in dem ein mit einer gewindeartigen inneren Verzahnung (12) versehener, koaxial zum Kolben (25) und zum Zylinder (2) angebrachter Führungsring (11) angeordnet ist, dadurch gekennzeichnet, dass die innere Verzahnung (12) des Führungsrings (11) mit einer äusseren Verzahnung (26) am Kolben (25) in Eingriff steht, wobei der Führungsring (11) mit seinem äusseren Durchmesser an der inneren Mantelfläche des Zylinders anliegt.

2. Aggregat nach Anspruch 1, dadurch gekennzeichnet, dass die äussere Ringaussenfläche (13) als glatte Führungsfläche ausgebildet ist.

3. Aggregat nach Anspruch 1 oder 2, dadurch gekennzeichnet, dass die äussere Ringaussenfläche (13) und/oder der Zylinder (2) mit, z.B. durchgehenden, Nuten (15) versehen sind.

4. Aggregat, nach mindestens einem der Ansprüche 1–3, dadurch gekennzeichnet, dass der Kolben (25) mindestens auf einem Teil seiner äusseren Mantelfläche gezahnt (26) ist.

5. Aggregat, nach mindestens einem der Ansprüche 1–4, dadurch gekennzeichnet, dass die Steigung der gewindeartigen Verzahnung (12, 26) 10°–60° beträgt, insbesondere 20 oder 30°.

6. Aggregat, nach mindestens einem der Ansprüche 1–5, dadurch gekennzeichnet, dass Mittel, z.B. eine Drehsicherungsplatte (21), vorgesehen sind, um den Kolben (25) drehfest zu gestalten.

7. Aggregat, nach mindestens einem der Ansprüche 1–6, dadurch gekennzeichnet, dass der Führungsring (11) eine zur inneren Verzahnung (12) gegenläufige Verzahnung aufweist, die in eine innere Verzahnung am Zylinder (2) eingreift.

8. Aggregat, nach mindestens einem der Ansprüche 1–7, mit drehfestem Kolben, dadurch gekennzeichnet, dass Mittel, z.B. ein Führungsring-Drehbegrenzer (33, 35, 36), oder ein durch den Führungsring betätigtes Druckmittel-Steuerventil (42) vorgesehen sind, um den Kolbenhub zu begrenzen.

## Claims

1. A piston cylinder assembly in which is arranged a guide ring (11) applied coaxially to the piston (25) and the cylinder (2) and provided with screw-like interior indentations (12), characterised in that the interior indentations (12) of the guide ring (11) mesh with exterior indentations (26) on the piston (25), the exterior diameter of the guide ring (11) being positioned on the interior surface of the cylinder.

2. An assembly according to claim 1, characterised in that the exterior outer surface of the ring (13) is formed as a smooth guide surface.

3. An assembly according to claim 1 or 2, characterised in that the exterior outer surface of the ring (13) and/or the cylinder (2) are provided with grooves (15), for example continuous grooves.

4. An assembly according to at least one of claims 1 to 3, characterised in that the piston (25) is indented (26) on at least part of its exterior surface.

5. An assembly according to at least one of claims 1 to 4, characterised in that the gradient of the screw-like indentations (12, 26) is from 10° to 60°, particularly 20 or 30°.

6. An assembly according to at least one of claims 1 to 5, characterised in that means are provided, for example a torsion safety plate (21), so that the piston (25) can be formed with torsional strength.

7. An assembly according to at least one of claims 1 to 6, characterised in that the guide ring (11) has indentations running in an opposite direction to the interior indentations (12) which mesh with interior indentations on the cylinder (2).

8. An assembly according to at least one of claims 1 to 7, with a piston with torsional strength, characterised in that means are provided for limiting the piston stroke, for example a guide ring torsional limiter (33, 35, 36) or a centre of pressure control valve (42), operated by the guide ring.

## Revendications

1. Ensemble à piston et cylindre, dans lequel est disposée une bague de guidage (11) qui est pourvue d'une denture intérieure en forme de filetage (12) et qui est montée coaxialement au piston (25) et au cylindre (2), caractérisé en ce que la denture intérieure (12) de la bague de guidage (11) est en prise avec une denture extérieure (26) du piston (25), la bague de guidage (11) s'appliquant, par son diamètre extérieur, contre la surface latérale intérieure du cylindre.

2. Ensemble selon la revendication 1, caractérisé en ce que la surface périphérique extérieure (13) de la bague est réalisée sous la forme d'une surface de guidage lisse.

3. Ensemble selon la revendication 1 ou 2, caractérisé en ce que la surface périphérique extérieure (13) de la bague et/ou le cylindre (2) sont pourvus de rainures (15), et par exemple de rainures continues.

4. Ensemble selon l'une au moins des revendications 1 à 3, caractérisé en ce que le piston (25) est denté (en 26) sur au moins une partie de sa surface d'enveloppe extérieure.

5. Ensemble selon l'une au moins des revendications 1 à 4, caractérisé en ce que l'inclinaison de la denture en forme de filetage (12, 26) est de 10° à 60°, et en particulier de 20 ou 30°.

6. Ensemble selon l'une au moins des revendications 1 à 5, caractérisé en ce que des moyens, comme par exemple une plaquette d'immobilisation en rotation (21), sont prévus pour réaliser un blocage de la rotation du piston (25).

7. Ensemble selon l'une au moins des revendications 1 à 6, caractérisé en ce que la bague de guidage (11) présente une denture de sens opposé à la denture intérieure (12) et qui vient en prise avec une denture intérieure du cylindre (2).

8. Ensemble selon l'une au moins des revendications 1 à 7, équipé d'un piston immobilisé en rotation, caractérisé en ce que des moyens, comme par exemple un limiteur (33, 35, 36) de la rotation de la bague de guidage ou une soupape de commande à fluide sous pression (42) actionnée par la bague de guidage, sont prévus pour limiter la course du piston.

FIG.1

FIG. 2

FIG. 3

FIG. 4